# FASCICULE DE BREVET EUROPEEN

(11) **EP 1 212 543 B1**
(45) Date de publication et mention de la délivrance du brevet: **07.01.2004**
(21) Numéro de dépôt: 00962607.8
(22) Date de dépôt: 12.09.2000
(51) Int. Cl.: F16C 33/32, F16C 33/58

(54) **ROULEMENT A BILLES HYBRIDE A CONTACT OBLIQUE**
HYBRIDES SCHRÄGKUGELLAGER
HYBRID BALL BEARING WITH OBLIQUE CONTACT

(30) Priorité: 14.09.1999 FR 9911472
(43) Date de publication de la demande: 12.06.2002
(73) Titulaire: SNFA, 94200 Ivry sur Seine (FR)
(72) Inventeur: BIBET, Alain, Jean, F-59990 Maresches (FR); CAHEZ, Jean-Pierre, André, F-92320 Châtillon (FR)
(74) Mandataire: Bérogin, Francis
(86) Numéro de dépôt international: PCT/FR2000/002508
(87) Numéro de publication internationale: WO 2001/020182

(56) Documents cités:
- EP-A- 0 241 879
- EP-A- 0 492 660
- DE-A- 4 142 313
- DE-A- 19 757 027
- DE-U- 6 906 209
- GB-A- 2 286 860
- US-A- 4 770 549
- PATENT ABSTRACTS OF JAPAN vol. 011, no. 368 (M-647), 2 décembre 1987 (1987-12-02) & JP 62 141314 A (AGENCY OF IND SCIENCE & TECHNOL;OTHERS: 02), 24 juin 1987 (1987-06-24)
- PATENT ABSTRACTS OF JAPAN vol. 007, no. 254 (M-255), 11 novembre 1983 (1983-11-11) & JP 58 137621 A (FUJI SEIKOU KK), 16 août 1983 (1983-08-16)

## Description

L'invention concerne un roulement à billes, du type dit à contact oblique, comprenant :
- une bague extérieure en acier, présentant deux pistes de roulement intérieures agencées sensiblement dos-à-dos et formées par des gorges de roulement dont la concavité est tournée radialement vers l'axe du roulement et axialement chacune latéralement d'un côté respectivement du roulement,
- une bague intérieure en acier, constituée de deux demi-bagues intérieures disposées côte-à-côte et aptes à être préchargées axialement l'une contre l'autre, et présentant chacune une piste de roulement extérieure formée par une gorge de roulement dont la concavité est tournée radialement vers l'extérieur du roulement et axialement vers l'autre demi-bague intérieure, de sorte que la piste de roulement extérieure de chaque demi-bague intérieure est en regard de l'une respectivement des deux pistes de roulement intérieures de la bague extérieure,
- deux rangées de billes, dont les billes de chaque rangée sont disposées entre les deux pistes de roulement de l'une respectivement des deux paires de pistes de roulement en regard, et en contact oblique avec ces deux pistes de roulement, et
- deux cages à billes, dont chacune retient les billes d'une rangée de billes respectivement et est disposée entre la bague extérieure et la demi-bague intérieure correspondante.

Un tel roulement à billes est connu du document EP0 241 879 A.

L'invention se rapporte plus particulièrement à des roulements à billes du type précité, de grande précision, par exemple de niveau ABEC7 ou 9, et notamment de qualité aéronautique.

Plus spécifiquement, l'invention concerne un roulement à billes du type précité, préchargé au montage par une précharge axiale des demi-bagues intérieures l'une contre l'autre, le roulement étant d'un grand diamètre et convenant à son application sur un dispositif de plateaux cycliques d'hélicoptère, c'est-à-dire un dispositif permettant la commande des pas collectif et cyclique des pales d'un rotor principal d'hélicoptère.

On connaît déjà des roulements à billes du type à contact oblique tel que défini ci-dessus, dont les bagues en acier coopèrent avec des billes également en acier.

Ces roulements connus ont pour inconvénient d'être sujets à une oxydation, qui peut conduire à un écaillage des billes comme des pistes de roulement, entraînant une durée de vie limitée des roulements.

Le problème à la base de l'invention est de remédier à cet inconvénient principal des roulements à billes de ce type de l'état de la technique.

A cet effet, l'invention propose un roulement à billes à contact oblique du type défini ci-dessus, qui se caractérise en ce que les billes des deux rangées sont en céramique, au moins en surface, et les bagues en acier sont revêtues, au moins sur leurs pistes de roulement, d'un revêtement en alliage à base de chrome.

On obtient ainsi un roulement à billes hybride, qui procure une excellente protection anti-corrosion, alliée à un excellent comportement tribologique sous charge essentiellement axiale, ce qui correspond au mode d'utilisation pour lequel les roulements à billes à contact oblique préchargés sont particulièrement destinés.

Avantageusement de plus, les billes des deux jeux sont frittées en céramique, ce qui procure en outre une réduction de masse importante, pouvant atteindre 10 % de la masse totale du roulement. Avantageusement, la céramique des billes est au moins en partie constituée de nitrure de silicium (Si3N4) ou de carbure de titane (TiC).

L'acier de la bague extérieure et l'acier des demi-bagues intérieures sont avantageusement choisis parmi les aciers suivants : aciers à roulement traditionnels ayant subis au moins une refusion sous vide, de préférence 100C6 VIM-VAR, ou des aciers inoxydables dans la masse, de préférence du type PYROWEAR 675 ou XD15N, ce qui permet d'obtenir une grande durée de vie du roulement.

Avantageusement en outre, le revêtement en alliage de chrome est un revêtement à forte teneur en chrome et dense, c'est-à-dire sensiblement sans porosité de surface, et d'une épaisseur d'environ 2 µm à environ 5 µm, réalisé par dépôt électrolytique, ce qui procure notamment une excellente protection anti-corrosion, résultant de la coopération de l'alliage de chrome du revêtement des pistes des bagues avec la céramique des billes, tout en procurant une rigidité supérieure à celle des roulements connus de ce type.

Ces propriétés favorables, et en particulier l'excellent comportement tribologique sous charge, entraînent une dégradation fortement réduite des graisses de lubrification d'un tel roulement, par rapport à ce qui est constaté sur les roulements de même type de l'état de la technique.

A raison de la protection anti-corrosion ainsi assurée, de la rigidité supérieure obtenue et de la réduction de la dégradation des graisses de lubrification, il en résulte qu'un roulement selon l'invention présente des coûts de maintenance très réduits.

La protection des bagues du roulement peut encore être améliorée en revêtant la face extérieure de la bague extérieure et/ou la face intérieure de chaque demi-bague intérieure au moins partiellement d'un dépôt de cuivre.

Concernant les cages à billes, chacune d'elles présente avantageusement une partie périphérique latérale externe décalée radialement vers l'extérieur par rapport à sa partie périphérique latérale interne, par laquelle chaque cage est centrée autour d'une portée cylindrique sur la face extérieure de la demi-bague intérieure correspondante. En outre, chaque cage à billes peut être monobloc et métallique ou en composite, par exemple en aluminium ou en bronze, ou encore en composite avec une matrice synthétique armée de fibres, éventuellement tressée, par exemple en CELERON (marque déposée) ou en fibres courtes de carbone dans une matrice P. E. E. K. (polyether-ether-cetone).

Un roulement à billes hybride à contact oblique préchargé selon l'invention, et de grand diamètre, trouve une application particulièrement avantageuse à l'équipement de dispositifs à plateaux cycliques pour hélicoptère, et, plus généralement, dans toutes les applications dans lesquelles des efforts axiaux importants sont encaissés, entre un arbre rotatif et un carter fixe par exemple.

D'autres caractéristiques et avantages de l'invention ressortiront de la description donnée ci-dessous, à titre non limitatif, d'un exemple de réalisation décrit en référence aux dessins annexés, sur lesquels :
- la figure 1 est une vue en demi-coupe axiale d'un roulement à billes hybride à contact oblique préchargé selon l'invention,
- la figure 2 représente la bague extérieure du roulement de la figure 1 en coupe transversale, à une échelle supérieure,
- la figure 3 représente une coupe transversale d'une demi-bague intérieure du roulement de la figure 1, dans les mêmes conditions que la figure 2,
- la figure 4 est une demi-coupe axiale de l'une des deux cages à billes du roulement de la figure 1, et
- la figure 5 est une vue en coupe transversale de la cage de la figure 4.

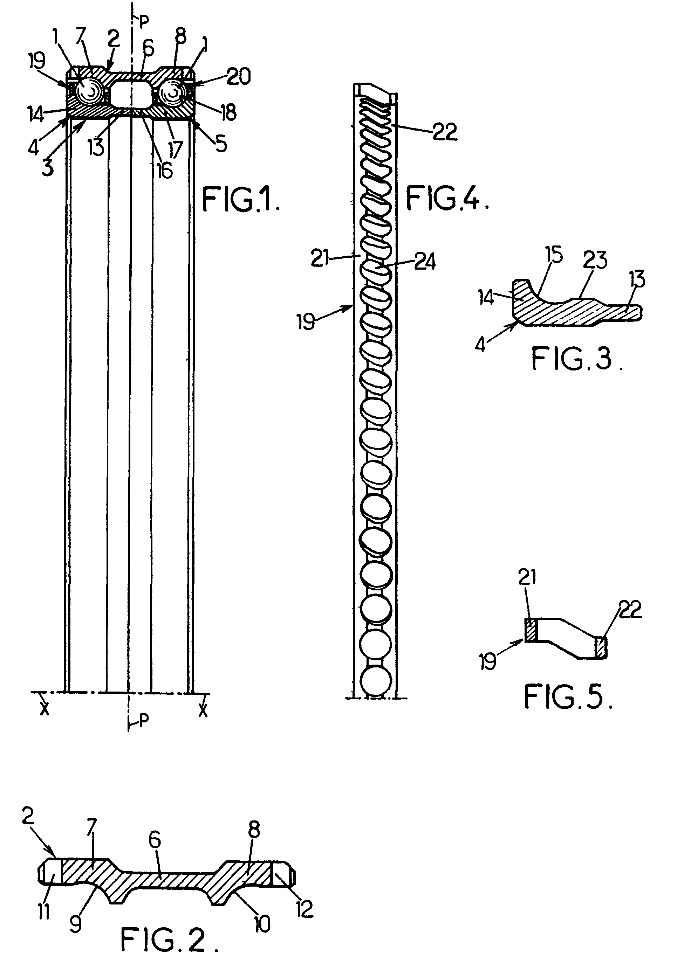

La figure 1 représente un roulement hybride à double rangée de billes 1 en céramique, à contact oblique entre une bague extérieure 2 monobloc et une bague intérieure 3 constituée de deux demi-bagues intérieures 4 et 5, disposées côte-à-côte et axialement préchargées l'une contre l'autre en service.

Plus précisément, la bague extérieure 2 est en acier et de forme générale cylindrique. Cette bague extérieure 2 comprend une partie centrale 6 de diamètre externe plus faible que celui de ses deux parties latérales 7 et 8, entre lesquelles la partie centrale 6 s'étend, et qui chacune présente l'une respectivement de deux pistes de roulement intérieures 9 et 10. Ces pistes 9 et 10 sont réalisées sous la forme de gorges de roulement, de révolution autour de l'axe X-X du roulement et orientées sensiblement dos-à-dos, c'est-à-dire de gorges 9 et 10 de section radiale en arc-de-cercle présentant leur concavité radialement vers l'axe X-X du roulement et axialement chacune latéralement vers l'extérieur du roulement, du côté de la partie latérale 7 ou 8 correspondante.

Latéralement à l'extérieur de chaque gorge de roulement 9 ou 10, la partie latérale 7 ou 8 correspondante de la bague extérieure 2, présente, dans sa face latérale, trois encoches 11 ou 12, équidistantes en direction circonférentielle sur la périphérie latérale de la partie latérale 7 ou 8 correspondante, ces encoches 11 et 12 de la bague extérieure 2 étant destinées à réaliser une retenue en rotation de cette bague extérieure 2 sur un carter par exemple.

Chacune des demi-bagues intérieures 4 et 5 en acier comporte, comme représenté pour la demi-bague intérieure 4 sur la figure 3, une partie axiale interne 13, de forme cylindrique, de diamètre intérieur plus grand et de diamètre extérieur plus petit que ceux d'une partie axiale externe ou latérale 14, qui présente une piste de roulement extérieure 15. L'autre demi-bague intérieure 5 est d'une structure symétrique de celle de la demi-bague intérieure 4 et comporte également une partie axiale interne 16 et une partie axiale externe ou latérale 17 présentant une piste de roulement extérieure 18, les deux demi-bagues intérieures 4 et 5 étant espacées axialement l'une de l'autre d'un interstice calculé, au repos, et préchargées axialement l'une contre l'autre, au montage du roulement en configuration d'utilisation, et alors en contact axial par leurs parties axiales internes 13 et 16. Les pistes de roulement extérieures 15 et 18 ont la forme de gorges de roulement également de révolution autour de X-X, de section radiale en arc-de-cercle et dont la concavité de chacune est tournée radialement vers l'extérieur du roulement et axialement vers la piste de roulement extérieure 18 ou 15 de l'autre demi-bague intérieure 5 ou 4, c'est-à-dire que les pistes de roulement extérieures 15 et 18 de la bague intérieure 3 sont sensiblement disposées face-à-face.

Les billes 1 d'une rangée sont montées en contact roulant entre la gorge de roulement extérieure 15 de la demi-bague intérieure 4 et la gorge de roulement intérieure 9 en regard sur la bague extérieure 2, tandis que les billes 1 de l' autre rangée sont montées en contact roulant entre la gorge de roulement extérieure 18 de la demi-bague intérieure 5 et la gorge de roulement intérieure 10 en regard sur la bague extérieure 2.

Les billes 1 sont ainsi montées à contact oblique, par rapport au plan médian et radial P-P du roulement, qui est un plan de symétrie pour les composants du roulement, et qui correspond au plan de contact axial des demi-bagues intérieures 4 et 5 par leurs parties axiales internes 13 et 16, lorsque le roulement est préchargé axialement au montage, en configuration d'utilisation.

Le roulement comprend également deux cages à billes 19 et 20, également symétriques par rapport au plan radial P-P, et chacune monobloc. La cage 19 retient les billes 1 de la première rangée entre la bague extérieure 2 et la demi-bague intérieure 4, entre lesquelles cette cage 19 est disposée, tandis que l'autre cage 20 retient les billes 1 de la seconde rangée entre la bague extérieure 2 et la demi-bague intérieure 5, entre lesquelles cette cage 20 est disposée. Comme représenté sur les figures 4 et 5 pour la cage 19, chacune des cages 19 et 20, qui est traversée radialement d'alvéoles 24 logeant chacune l'une respectivement des billes 1 correspondantes, comporte une partie périphérique latérale externe 21 décalée radialement vers l'extérieur par rapport à une partie périphérique latérale interne 22 de cette même cage 19 ou 20, qui est centrée par cette partie périphérique latérale interne 22 autour d'une portée cylindrique extérieure 23 (voir figure 3) ménagée sur la demi-bague intérieure correspondante 4 ou 5, entre la gorge de roulement 15 ou 18 correspondante et la partie axiale interne 13 ou 16 correspondante.

A noter que ces parties axiales internes 13 et 16 présentent également, sur leur périphérie latérale interne, au moins une encoche permettant la retenue en rotation des deux demi-bagues 4 et 5 de la bague intérieure 3 sur un arbre monté dans le roulement.

Les billes 1 des deux rangées de billes sont frittées en céramique, par exemple en Si3N4 ou TiC. Ces billes 1 en céramique coopèrent avec les gorges de roulement 9, 10 et 15, 18 des bagues 2 et 3 en acier qui sont revêtues, au moins sur les gorges de roulement, mais en variante sur toutes leurs surfaces lorsque l'acier des bagues 2 et 3 n'est pas inoxydable, d'un revêtement d'un alliage dense à forte teneur en chrome. L'acier choisi pour réaliser les bagues 2 et 3 est un acier à grande durée de vie, par exemple un acier à roulement traditionnel du type 100C6 élaboré par un procédé comportant une double refusion sous vide, lui donnant de grande propriétés inclusionnaires (pour limiter les inclusions), un tel acier étant couramment dénommé 100C6 VIM-VAR. L'acier des bagues 2 et 3 peut également être un acier inoxydable dans la masse, dont l'inoxydabilité perdue au niveau des pistes 9, 10, 15 et 18 par une cémentation pratiquée sur ces pistes pour augmenter la dureté, est compensée par le revêtement d'alliage de chrome dense sur les pistes de roulement, un tel acier inoxydable dans la masse étant de préférence l'un de ceux commercialisés sous la dénomination PYROWEAR 675 de la société CARPENTER (USA), et sous la dénomination commerciale XD15N de la Société française AUBERT ET DUVAL.

Le revêtement d'alliage de chrome dense est un revêtement sensiblement sans porosité de surface, dont l'épaisseur est d'environ 2 µm à environ 5 µm, et qui est réalisé par dépôt électrochimique, et plus précisément électrolytique. Ce dépôt est de préférence réalisé en mettant en oeuvre le procédé de dépôt électrolytique connu sous le nom de marque « Electrolizing », mis en oeuvre en France par la société DELAGE ELECTROLIZING S.A. de Chambéry, France. Ce procédé permet de déposer par voie électrolytique un revêtement de surface en un alliage dense, non magnétique, extrêmement dur, à forte teneur en chrome, à surface lisse régulière, uniforme, sans porosité ni nodule, procurant une protection contre la corrosion, une augmentation de la résistance à l'usure et une réduction des frottements, notamment.

Eventuellement, le revêtement d'alliage de chrome dense peut être appliqué sur toute la surface intérieure de la bague extérieure 2 comme sur toute la surface extérieure de chaque demi-bague intérieure 4 ou 5, lorsque l'acier des bagues 2 et 3 n'est pas inoxydable.

Eventuellement également, un revêtement de cuivre peut être déposé sur toute ou partie de la surface extérieure de la bague extérieure 2 et/ou sur toute ou partie de la surface intérieure de chaque demi-bague intérieure 4 ou 5, que l'acier des bagues 2 et 3 soit ou non inoxydable.

Concernant les cages 19 et 20, dont les faces latérales ne débordent pas des faces latérales des bagues 2 et 3, chaque cage 19 ou 20 monobloc peut être métallique, par exemple en bronze ou en aluminium. Mais chaque cage 19 ou 20 peut également être en matériau composite, par exemple avec une matrice synthétique en une résine thermoplastique telle que la résine P.E.E.K. (polyether-ether-cetone) armée de fibres de renfort, par exemple de fibres courtes de carbone. En variante, chaque cage 19 ou 20 composite peut également être réalisée dans le matériau commercialisé sous le nom de marque de CELERON, et réalisé à partir d'une trame tressée en coton enduite de résine polymérisée.

Le roulement décrit ci-dessus permet une réduction de masse importante, de l'ordre de 10 % grâce à la réalisation des billes 1 en céramique, et offre une rigidité supérieure à celle des réalisations de l'état de la technique, ainsi qu'une excellente protection anti-corrosion alliée à un comportement tribologique sous charge essentiellement axiale qui est excellent, en raison de la coopération de la céramique des billes 1 avec le revêtement d'alliage de chrome dense des gorges de roulement des bagues 2 et 3. Il en résulte également une dégradation des graisses et huiles de lubrification qui est fortement réduite, par rapport aux roulements de même type de l'état de la technique, et donc un coût de maintenance réduit.

Dans son application à l'équipement de dispositifs à plateaux cycliques pour hélicoptères, un roulement à billes selon l'invention permet d'atteindre 1200 heures de fonctionnement suivant un cycle opérationnel de l'hélicoptère sans regraissage.

## Revendications

1. Roulement à billes, du type à contact oblique, comprenant :
- une bague extérieure (2) en acier, présentant deux pistes de roulement intérieures (9, 10) agencées sensiblement dos-à-dos et formées par des gorges de roulement dont la concavité est tournée radialement vers l'axe (X-X) du roulement et axialement chacune latéralement d'un côté respectivement du roulement,
- une bague intérieure (3) en acier, constituée de deux demi-bagues intérieures (4, 5) disposées côte-à-côte et aptes à être préchargées axialement l'une contre l'autre, et présentant chacune une piste de roulement extérieure (15, 18) formée par une gorge de roulement dont la concavité est tournée radialement vers l'extérieur du roulement et axialement vers l'autre demi-bague intérieure (5, 4), de sorte que la piste de roulement extérieure (15, 18) de chaque demi-bague intérieure (4, 5) est en regard de l'une respectivement des deux pistes de roulement intérieures (9, 10) de la bague extérieure (2),
- deux rangées de billes (1 ), dont les billes (1) de chaque rangée sont disposées entre les deux pistes de roulement (9-15 ; 10-18) de l'une respectivement des deux paires de pistes de roulement en regard, et en contact oblique avec lesdites pistes de roulement, et
- deux cages (19, 20) à billes (1), dont chacune retient les billes (1) d'une rangée de billes respectivement et est disposée entre la bague extérieure (2) et la demi-bague intérieure (4, 5) correspondante,
**caractérisé en ce que** les billes (1) des deux rangées sont en céramique, au moins en surface, et les bagues (2, 3) en acier sont revêtues, au moins sur leurs pistes de roulement (9, 10, 15, 18), d'un revêtement d'un alliage à base de chrome.

2. Roulement à billes selon la revendication 1, **caractérisé en ce que** les billes (1) sont frittées en céramique.

3. Roulement à billes selon l'une des revendications 1 et 2, **caractérisé en ce que** la céramique est au moins en partie constituée de Si3N4 ou TiC.

4. Roulement à billes selon l'une quelconque des revendications 1 à 3, **caractérisé en ce que** l'acier de la bague extérieure (2) et l'acier de la bague intérieure (3) sont choisis parmi les aciers suivants : aciers à roulement traditionnels ayant subis au moins une refusion sous vide, de préférence du type 100C6 VIM-VAR, et aciers inoxydables dans la masse, de préférence du type PYROWEAR 675 ou XD15N.

5. Roulement à billes selon l'une quelconque des revendications 1 à 4, **caractérisé en ce que** le revêtement d'alliage de chrome est un revêtement à forte teneur en chrome et dense, d'une épaisseur d'environ 2 µm à environ 5 µm, réalisé par dépôt électrolytique.

6. Roulement à billes selon l'une quelconque des revendications 1 à 5, **caractérisé en ce que** chacune des cages (19, 20) à billes (1) présente une partie périphérique latérale externe (21) qui est décalée radialement vers l'extérieur par rapport à une partie périphérique latérale interne (22) de la cage (19, 20), par laquelle ladite cage (19, 20) est centrée autour d'une portée cylindrique (23) sur la face extérieure de la demi-bague intérieure (4, 5) correspondante.

7. Roulement à billes selon l'une quelconque des revendications 1 à 6, **caractérisé en ce que** chaque cage (19, 20) à billes est monobloc et métallique, de préférence en bronze ou en aluminium, ou composite à matrice synthétique armée de fibres, éventuellement tressées, de préférence de fibres courtes de carbone dans une résine P.E.E.K. (polyether-ether-cetone) ou en CELERON.

8. Roulement à billes selon l'une quelconque des revendications 1 à 7, **caractérisé en ce que** la face extérieure de la bague extérieure (2) et/ou la face intérieure de chaque demi-bague intérieure (4, 5) est/sont au moins en partie revêtue(s) d'un dépôt de cuivre.

9. Application d'un roulement à billes selon l'une quelconque des revendications 1 à 8 sur un dispositif à plateaux cycliques d'hélicoptère.

## Patentansprüche

1. Schrägkugellager: mit
- einem Außenring (2) aus Stahl mit zwei inneren Laufrillen (9, 10), die im Wesentlichen Rücken an Rücken ausgebildet sind und durch Ausnehmungen im Lager gebildet sind, deren Konkavität radial zur Rollachse (X-X) hin gedreht ist und axial seitlich zu jeweils einer Seite des Lagers hin
- einem Innenring (3) aus Stahl, bestehend aus zwei halben Innenringen (4, 5), die nebeneinander angeordnet sind und axial gegeneinander vorbelastbar sind, welche Innenringe (4, 5) jeweils eine äußere Laufrille (15, 18) aufweisen, die durch eine Ausnehmung im Lager gebildet ist, deren Konkavität radial in Richtung des Äußeren des Lagers und axial in Richtung des anderen halben Innenrings (5, 4) gedreht ist, so dass die äußere Laufrille (15, 18) jedes halben Innenrings (4, 5) jeweils einer der beiden inneren Laufrillen (9, 10) des Außenrings (2) gegenüber liegt
- zwei Reihen von Kugeln (1), wobei die Kugeln (1) jeder Reihe zwischen den beiden Laufrillen (9 - 15; 10 - 18) eines jeweiligen Paares von gegenüberliegenden Laufrillen und in schrägem Kontakt mit diesen Laufrillen angeordnet sind, und
- zwei Kugelkäfigen (19, 20), von denen jeder eine der Reihen von Kugeln hält und zwischen dem Außenring und dem entsprechenden halben Innenring (4, 5) angeordnet ist,
**dadurch gekennzeichnet, dass**
die Kugeln (1) der beiden Reihen zumindest an ihrer Oberfläche aus Keramik bestehen, und dass die Stahlringe (2, 3) zumindest im Bereich ihrer Laufrillen (9, 10; 15,18) mit einer Beschichtung aus einer Chromlegierung versehen sind.

2. Kugellager nach Anspruch 1, **dadurch gekennzeichnet, dass** die Kugeln (1) aus Keramik gesintert sind.

3. Kugellager nach einem der Ansprüche 1 und 2, **dadurch gekennzeichnet, dass** die Keramik zumindest teilweise aus Si3N4 oder TiC besteht.

4. Kugellager nach einem der Ansprüche 1 bis 3, **dadurch gekennzeichnet, dass** der Stahl des Außenrings (2) und der Stahl des Innenrings (3) aus den folgenden Stählen ausgewählt sind: traditionelle Wälzlagerstähle, die zumindest einer Umschmelzung im Vakuum unterzogen worden sind, vorzugsweise einer 100C6 VIM-VAR-Umschmelzung, und in der Masse nicht oxidierbare Stähle, vorzugsweise PYROWEAR 675 oder XD15N.

5. Kugellager nach einem der Ansprüche 1 bis 4, **dadurch gekennzeichnet, dass** die Beschichtung aus der Chromlegierung eine Beschichtung mit einem hohen Chromgehalt und dicht ist, mit einer Dicke von ca. 2 µm bis 5 µm, realisiert durch elektrolytische Abscheidung.

6. Kugellager nach einem der Ansprüche 1 bis 5, **dadurch gekennzeichnet, dass** jeder Kugelkäfig (19, 20) einen seitlichen äußeren Umfangsbereich (21) hat, der radial nach Außen bezüglich eines seitlichen inneren Umfangsbereichs (22) des Käfigs (19, 20) verschoben ist, durch welchen des Käfig (19, 20) um eine zylindrische Auflage (23) an der Außenfläche des entsprechenden halben Innenrings (4, 5) zentriert ist.

7. Kugellager nach einem der Ansprüche 1 bis 6, **dadurch gekennzeichnet, dass** jeder Kugelkäfig (19, 20) einstückig und metallisch ausgebildet ist, vorzugsweise aus Bronze oder aus Aluminium, oder aus einem Kompositmaterial mit synthetischer Matrize und darin eingebetteten Fasern, die eventuell verflochten sind, vorzugsweise kurzen Fasern aus Karbon in einem P.E.E.K.-Kunstharz (Polyether-Ether-Keton) oder aus CELERON.

8. Kugellager nach einem der Ansprüche 1 bis 7, **dadurch gekennzeichnet, dass** die Außenfläche des Außenrings (2) und/oder die Innenfläche jedes halben Innenrings (4, 5) zumindest teilweise mit einer Kupferbeschichtung versehen sind.

9. Verwendung eines Kugellagers nach einem der Ansprüche 1 bis 8 in einer Helikoptereinrichtung mit zyklischen Platten.

## Claims

1. A ball bearing of the angular contact type, comprising:
- an external ring (2) made of steel, having two internal raceways (9, 10) arranged substantially back to back and formed of raceway grooves, the concave side of which faces radially toward the axis (X-X) of the bearing and axially each laterally toward a respective side of the bearing,
- an internal ring (3) made of steel, consisting of two internal half-rings (4, 5) which are arranged side by side and capable of being axially preloaded against each other, each having an external raceway (15, 18) formed by a raceway groove, the concave side of which faces radially toward the outside of the bearing and axially toward the other internal half-ring (5, 4), so that the external raceway (15, 18) of each internal half-ring (4, 5) faces a respective one of the two internal raceways (9, 10) of the external ring (2),
- two rows of balls (1), the balls (1) of each row of which are arranged between the two raceways (9-15; 10-18) of a respective one of the two pairs of raceways facing each other, and in angular contact with said raceways; and
- two ball (1) cages (19, 20), each of which holds the balls (1) of a respective row of balls and is arranged between the external ring (2) and the corresponding internal half-ring (4, 5),
**characterized in that** the balls (1) of the two rows are made of ceramic, at least at the surface, and the rings (2, 3) made of steel are coated, at least on their raceways (9, 10, 15, 18), with a coating of a chromium-based alloy.

2. The ball bearing as claimed in claim 1, **characterized in that** the balls (1) are sintered and made of ceramic.

3. The ball bearing as claimed in one of claims 1 and 2, **characterized in that** the ceramic consists at least in part of Si₃N₄ or TiC.

4. The ball bearing as claimed in any of claims 1 to 3, **characterized in that** the steel of the external ring (2) and the steel of the internal ring (3) are chosen from the following steels: conventional bearing steels which have undergone at least one vacuum remelt, preferably of the 100C6 VIM-VAR type, and steels which are stainless in the mass, preferably of the PYROWEAR 675 or XD15N type.

5. The ball bearing as claimed in any of claims 1 to 4, **characterized in that** the coating of chromium alloy is a coating with a high chromium content and dense, about 2 µm to about 5 µm thick, produced by electrolytic deposition.

6. The ball bearing as claimed in any of claims 1 to 5, **characterized in that** each of the ball (1) cages (19, 20) has an outer lateral peripheral part (21) which is offset radially toward the outside with respect to an inner lateral peripheral part (22) of the cage (19, 20), via which part said cage (19, 20) is centered about a cylindrical bearing surface (23) on the outside face of the corresponding internal half-ring (4, 5).

7. The ball bearing as claimed in any of claims 1 to 6, **characterized in that** each ball cage (19, 20) is of one piece and made of metal, preferably of bronze or aluminum, or composite with a synthetic matrix reinforced with fibers, possibly braided, preferably short carbon fibers in a PEEK (polyetheretherketone) resin or of CELERON.

8. The ball bearing as claimed in any of claims 1 to 7, **characterized in that** the outside face of the external ring (2) and/or the inside face of each internal half-ring (4, 5) is/are at least partially coated with a deposit of copper.

9. An application of a ball bearing as claimed in any of claims 1 to 8 to a helicopter swashplate device.
